# EUROPEAN PATENT APPLICATION

(11) **EP 4 178 289 A1**
(43) Date of publication of application: **10.05.2023**
(21) Application number: 20943878.7
(22) Date of filing: 06.07.2020
(51) Int. Cl.: H04W 72/04, H04W 4/00, H04W 76/34

(54) **TERMINAL, BASE STATION AND COMMUNICATION METHOD**

(71) Applicant: NTT DOCOMO, INC., Chiyoda-Ku Tokyo 100-6150 (JP)
(72) Inventor: OKAMURA, Masaya, Tokyo 100-6150 (JP); OHARA, Tomoya, Tokyo 100-6150 (JP)
(74) Representative: Hoffmann Eitle
(86) International application number: PCT/JP2020/026496
(87) International publication number: WO 2022/009290

(57) **Abstract**

A terminal includes a receiving unit configured to receive signaling that causes a secondary cell to be dormant and control information via the secondary cell, a control unit configured to, in a case where the receiving unit receives the signaling that causes the secondary cell to be dormant, assume that a channel of a primary cell is scheduled by the control information, and a communication unit configured to execute transmission or reception by using the channel of the primary cell.

## Description

### Technical Field

The present invention relates to a terminal, a base station, and a communication method in a wireless communication system.

### Background Art

In NR (New Radio) (also referred to as "5G"), which is a successor of LTE (Long Term Evolution), techniques for satisfying, as required conditions, large capacity system, high data transmission speed, low delay, and simultaneous connection of many terminals, low cost, power saving, and the like are being discussed. (for example, Non-Patent Document 1).

Dynamic spectrum sharing (DSS), in which LTE and NR coexist in the same band, is being discussed (for example, Non-Patent Document 2). With different RATs (Radio Access Technologies) coexisting in a single carrier, traffic demands at the time of system generation switching can be flexibly handled.

### Prior Art Document

### Non-Patent Document

Non-Patent Document 1: 3GPP TS 38.300 V15.8.0 (2019-12)
Non-Patent Document 2: 3GPP TSG RAN Meeting #86 RP-192678 (2019-12)

### Summary of the Invention

### Problem to be Solved by the Invention

In the current technical specification of the DSS, resources for sending and receiving control signals are configured for each of an LTE terminal and an NR terminal. The resources in which the control signals can be arranged are specified in advance and the systems coexist in a single carrier, and therefore, it is assumed that resources for sending and receiving control signals may become insufficient as compared with the case where the systems are operated independently.

The present invention has been made in view of the above issues, and alleviates a resource shortage for transmitting and receiving control signals when a plurality of RATs (Radio Access Technologies) coexist in a single carrier in a radio communication system.

### Means for Solving Problem

According to the technique of the disclosure, provided is a terminal that includes a receiving unit configured to receive signaling that causes a secondary cell to be dormant and control information via the secondary cell, a control unit configured to, in a case where the receiving unit receives the signaling that causes the secondary cell to be dormant, assume that a channel of a primary cell is scheduled by the control information, and a communication unit configured to execute transmission or reception by using the channel of the primary cell.

### Effect of the Invention

According to the technique of the disclosure, a resource shortage for transmitting and receiving control signals can be alleviated when a plurality of RATs (Radio Access Technologies) coexist in a single carrier in a radio communication system.

### Brief Description of Drawings

FIG. 1 is a drawing illustrating an example of configuration of a radio communication system according to the embodiment of the present invention.
FIG. 2 is a drawing illustrating an example of arrangement of channels in a downlink according to the DSS.
FIG. 3 is a drawing illustrating an example of arrangement of channels in an uplink according to the DSS.
FIG. 4 is a drawing illustrating an example (1) of frequency allocation according to the DSS.
FIG. 5 is a drawing illustrating an example (2) of frequency allocation according to the DSS.
FIG. 6 is a drawing illustrating an example of arrangement of channels in an LTE downlink.
FIG. 7 is a drawing illustrating an example of arrangement of channels in an NR downlink.
FIG. 8 is a drawing illustrating an example of arrangement of channels in LTE and NR downlinks according to the DSS.
FIG. 9 is a drawing for explaining an example of cross-carrier scheduling.
FIG. 10 is a drawing for explaining an example (1) of cross-carrier scheduling according to the embodiment of the present invention.
FIG. 11 is a drawing for explaining an example of specification according to the cross-carrier scheduling.
FIG. 12 is a drawing for explaining an example (2) of cross-carrier scheduling according to the embodiment of the present invention.
FIG. 13 is a sequence diagram for explaining an example (2) of cross-carrier scheduling according to the embodiment of the present invention.
FIG. 14 is a drawing illustrating an example (1) of change of specifications related to cross-carrier scheduling according to the embodiment of the present invention.
FIG. 15 is a drawing illustrating an example (2) of change of specifications related to cross-carrier scheduling according to the embodiment of the present invention.
FIG. 16 is a drawing for explaining an example of MAC-CE according to the embodiment of the present invention.
FIG. 17 is a drawing for explaining an example (3) of cross-carrier scheduling according to the embodiment of the present invention.
FIG. 18 is a sequence diagram for explaining an example (3) of cross-carrier scheduling according to the embodiment of the present invention.
FIG. 19 is a drawing illustrating an example of a functional configuration of a base station 10 according to the embodiment of the present invention;
FIG. 20 is a drawing illustrating an example of a functional configuration of a terminal 20 according to the embodiment of the present invention; and
FIG. 21 is a drawing illustrating an example of a hardware configuration of the base station 10 or the terminal 20 according to the embodiment of the present invention.

### Mode for Carrying Out the Invention

An embodiment of the present invention will be hereinafter described with reference to the drawings. The embodiment described below is an example, and the embodiment to which the present invention is applied is not limited to the following embodiment.

In operation of a wireless communication system according to embodiments of the present invention, existing techniques are used as appropriate. However, an example of existing technique includes an existing LTE, but is not limited to the existing LTE. In addition, the term "LTE" used in this specification has a broad meaning including LTE-Advanced and specifications newer than LTE-Advanced (e.g., NR) unless otherwise specified.

In the embodiments of the present invention described below, terms such as SS (Synchronization signal), PSS (Primary SS), SSS (Secondary SS), PBCH (Physical broadcast channel), PRACH (Physical random access channel), PDCCH (Physical Downlink Control Channel), PDSCH (Physical Downlink Shared Channel), PUCCH (Physical Uplink Control Channel), PUSCH (Physical Uplink Shared Channel), and the like used in the existing LTE are used. This is for convenience of description, and signals, functions, and the like may be referred to as other names. In NR, the above terms correspond to NR-SS, NR-PSS, NR-SSS, NR-PBCH, NR-PRACH, and the like. However, even when signals are used for NR, "NR-" is not necesarily attached thereto.

In the embodiments of the present invention, the duplex method may be a TDD (Time Division Duplex) system, an FDD (Frequency Division Duplex) system, or others (for example, Flexible Duplex and the like).

Further, in the embodiment of the present invention, "to configure" a radio parameter or the like may be that a predetermined value is configured in advance (Pre-configure), or that a radio parameter indicated from a base station 10 or a terminal 20 is configured.

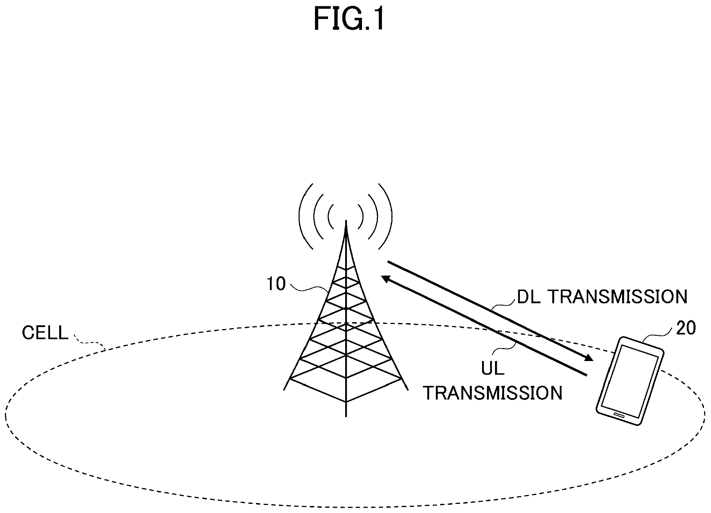

FIG. 1 is a drawing illustrating a configuration example of a wireless communication system according to the embodiment of the present invention. As illustrated in FIG. 1, the wireless communication system according to the embodiment of the present invention includes a base station 10 and a terminal 20. In FIG. 1, one base station 10 and one terminal 20 are illustrated, but this is only an example. Alternatively, a plurality of base stations 10 and terminals 20 may be provided.

The base station 10 provides one or more cells, and is a communication apparatus wirelessly communicating with the terminal 20. The physical resource of a radio signal may be defined by the time domain and the frequency domain. The time domain may be defined by slots or the number of OFDM (Orthogonal Frequency Division Multiplexing) symbols. The frequency domain may be defined by the number of sub-carriers or the number of resource blocks. The base station 10 transmits a synchronization signal and system information to the terminal 20. The synchronization signal is, for example, an NR-PSS and an NR-SSS. The system information is transmitted in, for example, an NR-PBCH, and is also referred to as broadcast information. The synchronization signal and the system information may also be referred to as an SSB (SS/PBCH block). As illustrated in FIG. 1, the base station 10 transmits control signals or data in the DL (Downlink) to the terminal 20, and receives control signals or data in the UL (Uplink) from the terminal 20. Both the base station 10 and the terminal 20 can transmit and receive signals by performing beamforming. Both of the base station 10 and the terminal 20 can apply communication based on MIMO (Multiple Input Multiple Output) to the DL or the UL. Also, both of the base station 10 and the terminal 20 may perform communication via a secondary cell (SCell)and primary cell (PCell) with CA (Carrier Aggregation). Furthermore, the terminal 20 may perform communication via the primary cell of the base station 10 and the primary secondary cell group cell (PSCell) of another base station 10 with DC (Dual Connectivity).

The terminal 20 is a communication apparatus equipped with a wireless communication function such as a smartphone, a mobile phone, a tablet, a wearable terminal, and a communication module for M2M (Machine-to-Machine). As illustrated in FIG. 1, the terminal 20 receives control signals or data from the base station 10 in DL, and transmits control signals or data to the base station 10 in UL, thereby using various communication services provided by the wireless communication system. Also, the terminal 20 receives various kinds of reference signals transmitted from the base station 10, and executes measurement of the propagation channel quality on the basis of the reception result of the reference signal.

Hereinafter, an example of DSS (Dynamic Spectrum Sharing) technique in which LTE and NR coexist in the same band is explained. With the DSS technique, different RATs (Radio Access Technologies) coexist in a single carrier, so that traffic demands at the time of system generation switching can be flexibly handled. With the DSS technique, different RATs can operate in a single carrier.

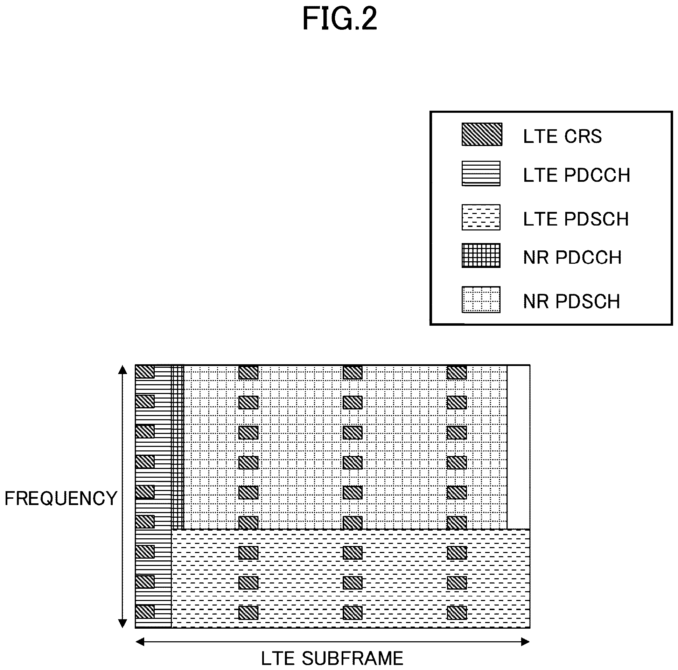

FIG. 2 is a drawing illustrating an example of arrangement of channels in a downlink according to the DSS. The time domain as illustrated in FIG. 2 corresponds to 1 sub-frame of the LTE. As illustrated in FIG. 2, in the downlink, "LTE-CRS (Cell specific reference signal)", "LTE-PDCCH", and "LTE-PDSCH" are transmitted as the signal or channel of the LTE. Furthermore, as illustrated in FIG. 2, in the downlink, "NR-PDCCH" and "NR-PDSCH" are transmitted as a channel of the NR. For example, although not illustrated, "NR-PDSCH" may include a resource in which a DM-RS (Demodulation reference signal) is arranged. For example, as illustrated in FIG. 2, "LTE-CRS" may be arranged adjacent to "NR-PDSCH".

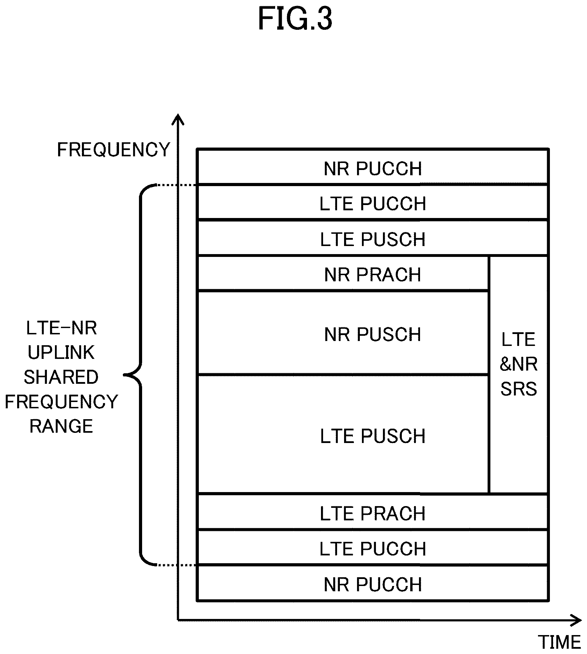

FIG. 3 is a drawing illustrating an example of arrangement of channels in an uplink according to the DSS. As illustrated in FIG. 3, the channels or the signals in the uplink of the LTE and the NR are arranged by sharing a frequency band. As illustrated in FIG. 3, for example, "NR-PUCCH", "LTE-PUCCH", "LTE-PRACH", "LTE-PUSCH", "NR-PUSCH", "NR-PRACH", "LTE-PUSCH", "LTE-PUCCH", and "NR-PUCCH" are arranged in this order from a low frequency to a high frequency. "LTE-SRS (Sounding Reference Signal)" or "NR-SRS" may be arranged in the frequency domain in which "LTE-PUSCH", "NR-PUSCH", and "NR-PRACH" are arranged.

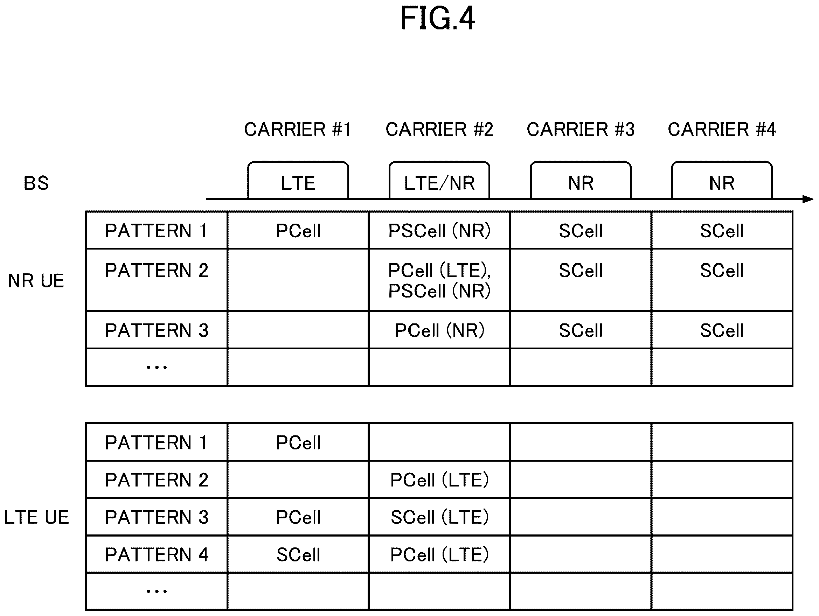

FIG. 4 is a drawing illustrating an example (1) of frequency allocation according to the DSS. As illustrated in FIG. 4, it is assumed that a BS (Base station) provides the LTE in the carrier #1, the LTE and the NR in the carrier #2, the NR in the carrier #3, and the NR in the carrier #4.

For example, for UE (User Equipment) of the NR, PCell (Primary Cell) of the LTE may be arranged in the carrier #1, PSCell (Primary Secondary Cell) of the NR may be arranged in the carrier #2, SCell (Secondary Cell) may be arranged in the carrier #3, and SCell may be arranged in the carrier #4, as in a pattern 1 illustrated in FIG. 4. For example, for the UE of the NR, PCell of the LTE and PSCell of the NR may be arranged in the carrier #2, SCell may be arranged in the carrier #3, and SCell may be arranged in the carrier #4, as in a pattern 2 illustrated in FIG. 4. For example, for the UE of the NR, PCell of the NR may be arranged in the carrier #2, SCell may be arranged in the carrier #3, and SCell may be arranged in the carrier #4, as in a pattern 3 illustrated in FIG. 4.

For example, for the UE of the LTE, PCell of the LTE may be arranged in the carrier #1, as in a pattern 1 illustrated in FIG. 4. For example, for the UE of the LTE, PCell of the LTE may be arranged in the carrier #2, as in the pattern 2 illustrated in FIG. 4. For example, for the UE of the LTE, PCell of the LTE may be arranged in the carrier #1, and SCell of the LTE may be arranged in the carrier #2, as in the pattern 3 illustrated in FIG. 4. For example, for the UE of the LTE, SCell of the LTE may be arranged in the carrier #1, and PCell of the LTE may be arranged in the carrier #2, as in the pattern 4 illustrated in FIG. 4.

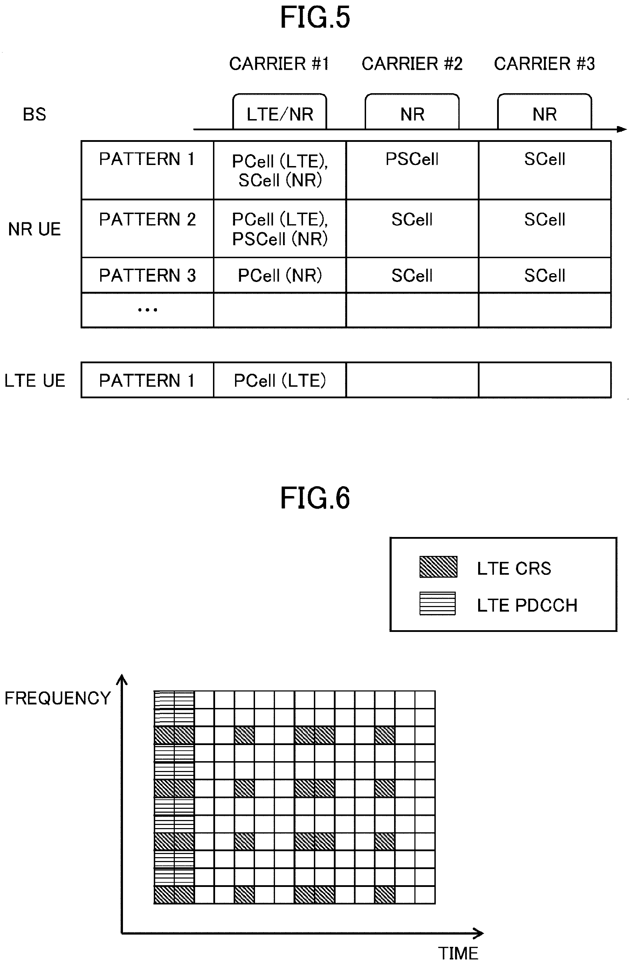

FIG. 5 is a drawing illustrating an example (2) of frequency allocation according to the DSS. As illustrated in FIG. 5, it is assumed that the BS provides the LTE and the NR in the carrier #1, the NR in the carrier #2, and the NR in the carrier #3.

For example, for the UE of the NR, as in the pattern 1 illustrated in FIG. 5, PCell of the LTE and SCell of the NR may be arranged in the carrier #1, PSCell of the NR may be arranged in the carrier #2, and SCell of the NR may be arranged in the carrier #3. For example, for the UE of the NR, PCell of the LTE and PSCell of the NR may be arranged in the carrier #1, PSCell of the NR may be arranged in the carrier #2, and SCell of the NR may be arranged in the carrier #3, as in the pattern 2 illustrated in FIG. 5. For example, for the UE of the NR, PCell of the NR may be arranged in the carrier #1, PSCell of the NR may be arranged in the carrier #2, SCell of the NR may be arranged in the carrier #3, as in the pattern 3 illustrated in FIG. 5.

For example, for the UE of the LTE, PCell of the LTE may be arranged in the carrier #1, as in the pattern 1 illustrated in FIG. 5.

Table 1 is an example illustrating a synchronization signal or a reference signal of the LTE and the NR for each of the purposes.

**[Table 1]**

| Purpose | LTE | NR |
|---|---|---|
| Synchronization (Coarse) | LTE PSS/SSS | NR PSS/SSS |
| Synchronization (Fine) | CRS | NR TRS |
| Downlink propagation channel estimation | LTE CRS/CSI-RS | NR CSI-RS |
| Uplink propagation channel estimation | LTE SRS | NR SRS |
| Phase noise estimation | N/A | NR PT-RS |
| Data decoding | LTE CRS/DM-RS | NR DM-RS |
| Broadcast signal decoding | CRS | NR PBCH DM-RS |

As illustrated in Table 1, in the LTE and the NR, signals are defined for the same or similar purposes. The purposes may indicate applications. For the coarse synchronization, LTE-PSS/SSS is used in the LTE, and NR-PSS/SSS is used in the NR. For the fine synchronization, CRS is used in the LTE, and NR-TRS is used in the NR. NR-TRS may be referred to as NR-CSI (Channel State Information)-RS for tracking. For the downlink propagation channel estimation, LTE-CRS/CSI-RS is used in the LTE, and NR-CSI-RS is used in the NR. For the uplink propagation channel estimation, LTE-SRS is used in the LTE, and NR-SRS is used in the NR. For the phase noise estimation, no signal for this purpose is configured in the LTE, and NR-PT (Phase tracking)-RS is used in the NR. For the data decoding, LTE-CRS/DM-RS is used in the LTE, and NR-DM-RS is used in the NR. For the broadcast signal decoding, CRS is used in the LTE, and NR-PBCH-DM-RS is used in the NR.

It should be noted that even if the names are the same, the configurations of physical signals may be different. For example, CSI-RS in the LTE and CSI-RS in the NR are different in the configurations of physical signals.

FIG. 6 is a drawing illustrating an example of arrangement of channels in an LTE downlink. In FIG. 6, the time domain corresponds to one sub-frame of the LTE, and the frequency domain corresponds to one resource block. As illustrated in FIG. 6, LTE-CRS is transmitted as a reference signal, and LTE-PDCCH is transmitted as a control signal.

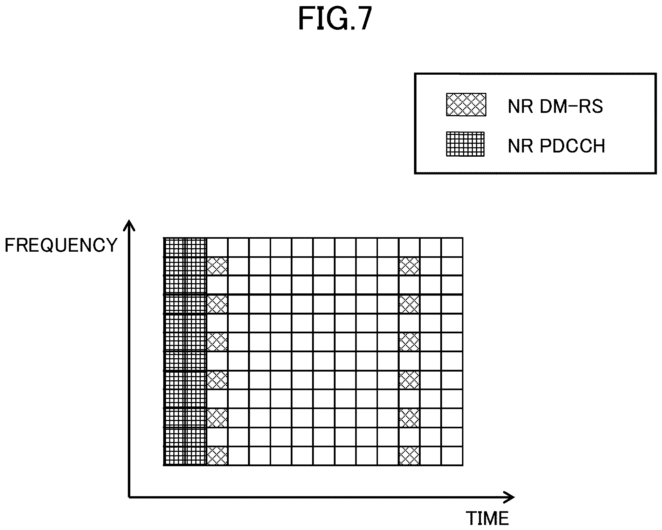

FIG. 7 is a drawing illustrating an example of arrangement of channels in an NR downlink. In FIG. 7, the time domain corresponds to one slot of the NR, the frequency domain corresponds to one resource block, and the sub-carrier interval is 15 kHz. As illustrated in FIG. 7, NR-DM-RS is transmitted as a reference signal, and NR-PDCCH is transmitted as a control signal.

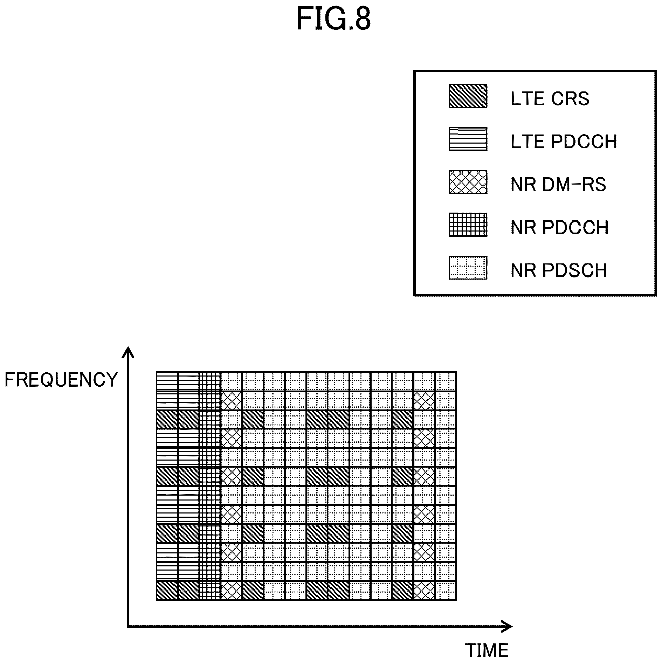

FIG. 8 is a drawing illustrating an example of arrangement of channels in LTE and NR downlinks according to the DSS. In the current specification of the DSS, signals for the same purpose are transmitted to the LTE terminal and to the NR terminal. As illustrated in FIG. 8, when the signal of the LTE and the signal of the NR are transmitted, the overhead increases, and the resource for transmitting data decreases.

Furthermore, the resource for the LTE-PDCCH and the resource for the NR-PDCCH overlap with each other in the 1-3 symbols at the head of the slot, and therefore, when the DSS is configured, the resource for the LTE-PDCCH or the NR-PDCCH is more greatly limited, as compared with the case where the DSS is not configured. For example, LTE-PDCCH is arranged in 2 symbols, and NR-PDCCH is arranged in one symbol, so that the resource of each of them decreases, as compared with the case where the DSS is not configured.

Furthermore, in the current specification, a cell that can schedule a primary cell (PCell (Primary Cell)) or a primary secondary cell group cell (PSCell (Primary SCG Cell)) is only the cell itself (hereinafter, the primary cell or the primary secondary cell group cell is referred to as P(S)Cell) . Specifically, PDCCH of the secondary cell (SCell (Secondary Cell)) cannot schedule PDSCH or PUSCH of the P(S)Cell. Therefore, in a case where carrier aggregation is performed when the DSS is applied, there is a concern that the PDCCH resource of the P(S)Cell becomes insufficient.

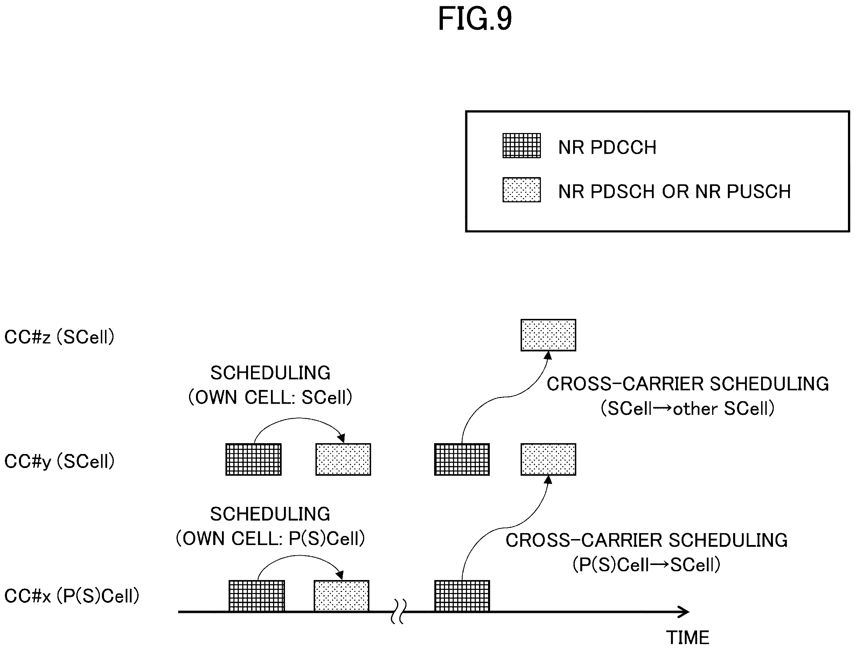

Accordingly, with the cross-carrier scheduling, shortage of the PDCCH resource of the P(S)Cell is alleviated. FIG. 9 is a drawing for explaining an example of cross-carrier scheduling. In FIG. 9, P(S)Cell is arranged in CC#x, SCell is arranged in CC#y, and other SCells are arranged in CC#z. As illustrated in FIG. 9, in cross-carrier scheduling, PDSCH or PUSCH of SCell is scheduled by PDCCH of P(S)Cell, or PDSCH or PUSCH of other SCells are scheduled by PDCCH of SCell.

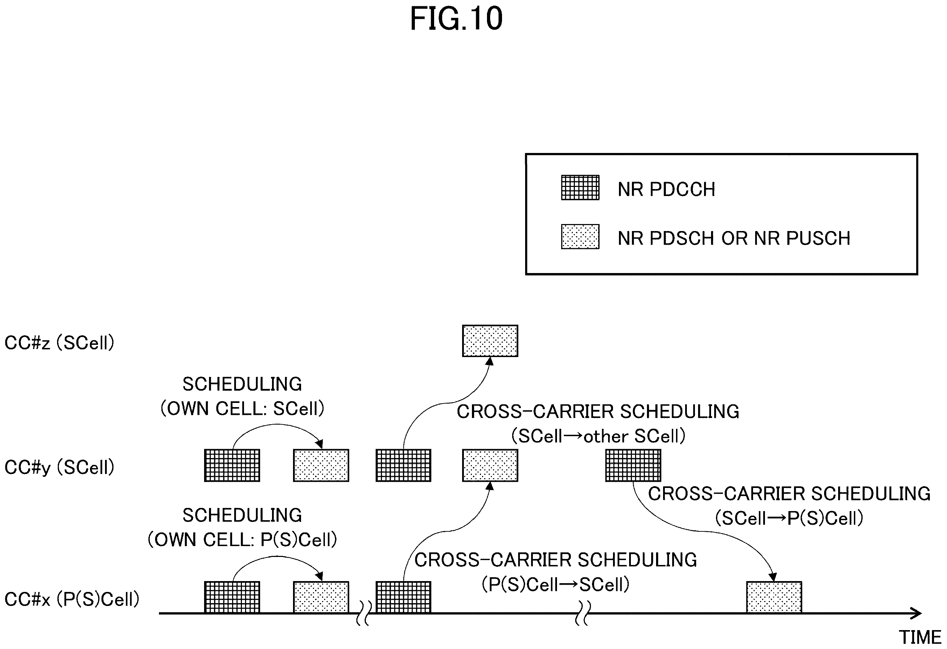

FIG. 10 is a drawing for explaining an example (1) of cross-carrier scheduling according to the embodiment of the present invention. In contrast, in the cross-carrier scheduling according to the embodiment of the present invention, as illustrated in FIG. 10, not only scheduling of PDSCH or PUSCH of SCell by PDCCH of P(S)Cell and scheduling of PDSCH or PUSCH of other SCells by PDCCH of SCell but also scheduling of PDSCH or PUSCH of P(S)Cell by PDCCH of SCell can be executed.

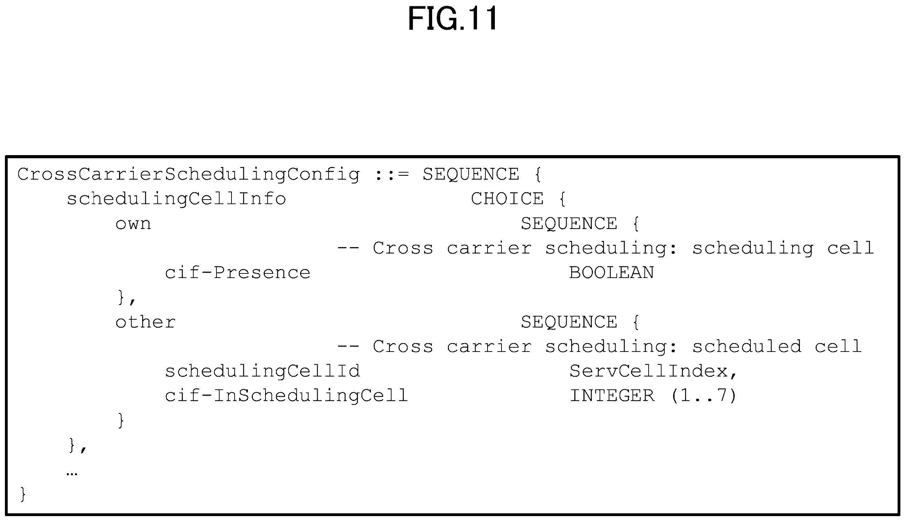

FIG. 11 is a drawing for explaining an example of specification according to the cross-carrier scheduling. As described above, cross-carrier scheduling of PDSCH or PUSCH of P(S)Cell may be performed by PDCCH of SCell. In a case where information element "schedulingCellInfo" according to cross-carrier scheduling as illustrated in FIG. 11 is configured to "other", the terminal 20 may assume that the PDSCH or PUSCH of P(S)Cell or SCell is scheduled.

The "schedulingCellInfo" as illustrated in FIG. 11 is an information element that performs configuration related to cross-carrier scheduling, and may be configured for each cell. In a case where "schedulingCellInfo" is configured to "other", this indicates that the target cell is scheduled by another cell. In a case where "schedulingCellInfo" is configured to "own", this indicates that the target cell is scheduled by the cell itself. Also, "cif-Presence" is an information element indicating whether cross-carrier scheduling is performed or not in a case where the cell itself performs scheduling. For example, when "cif-Presence" is "true", the value of CIF (carrier indicator field) for scheduling the cell itself may be "0". "schedulingCellID" is an information element that indicates which cell schedules the cell itself in a case where scheduling is performed from another cell. Information indicating the cell may be "ServCellIndex". "cif-InschedulingCell" indicates the value of CIF supported by the cell itself included in control information (for example, DCI (Downlink Control Information)) of another cell in a case where scheduling is performed from another cell, and may be a value from 1 to 7.

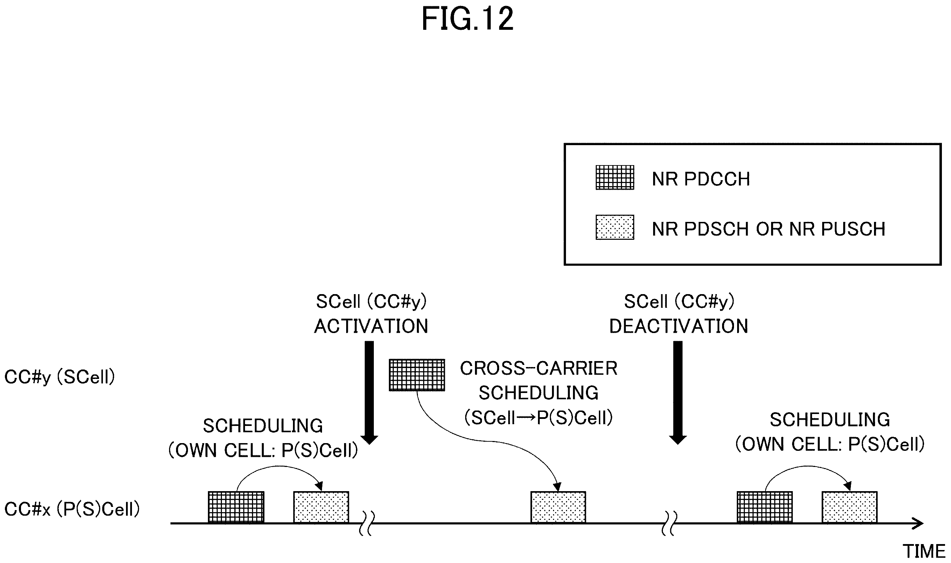

FIG. 12 is a drawing for explaining an example (2) of cross-carrier scheduling according to the embodiment of the present invention. In FIG. 12, P(S)Cell is arranged in CC#x, and SCell is arranged in CC#y. For example, it is assumed that, in any given terminal 20, for P(S)Cell, "schedulingCellInfo" is configured to "other", "schedulingCellID" is configured to "n1", and "cif-InschedulingCell" is configured to "n2". It should be noted that "n2" does not have to be 0, and may be configured to a value indicating P(S)Cell that is not used in normal circumstances.

In this case, as illustrated in FIG. 12, when SCell (ServCellIndex=n1) is activated (activation) by an MAC-CE (Medium Access Control - Control Element), PDSCH or PUSCH of P(S)Cell that is configured in the terminal 20 may be assumed to be cross-carrier scheduled by the DCI of which the CIF is "n2" in the SCell(ServCellIndex=n1). "When SCell (ServCellIndex=n1) is activated by the MAC-CE" may be replaced with "when SCell (ServCellIndex=n1) is in a dormant state".

The CIF included in the DCI of SCell in a case where PDSCH or PUSCH of P(S)Cell is scheduled may be assumed to be 0 bit. This is because there is only one P(S)Cell that is configured in the terminal 20. That is, in a case where the CIF included in the DCI of SCell is 0 bit, the terminal 20 may assume that PDSCH or PUSCH of P(S)Cell is scheduled, and in a case where the CIF included in the DCI of SCell is "n2" specified by the "cif-InschedulingCell", the terminal 20 may assume that PDSCH or PUSCH of P(S)Cell is scheduled.

As illustrated in FIG. 12, when SCell (ServCellIndex=n1) is deactivated (deactivation) by the MAC-CE, "other" of "schedulingCellInfo" that is configured in the P(S)Cell may be read as "own". Specifically, PDSCH or PUSCH of P(S)Cell that is configured in the terminal 20 may be assumed to be scheduled by the DCI of the P(S)Cell.

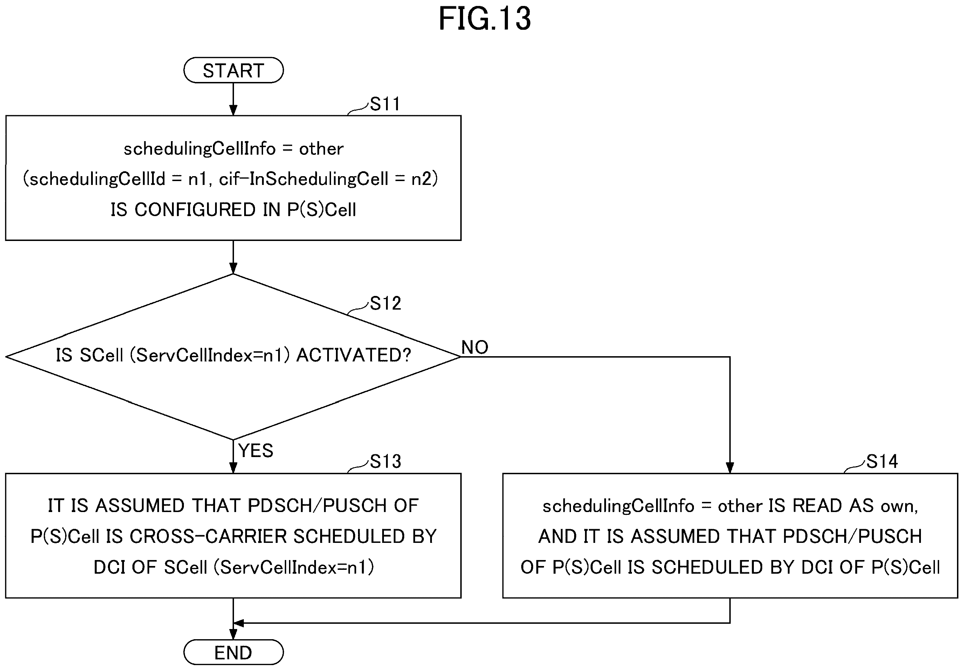

FIG. 13 is a sequence diagram for explaining an example (2) of cross-carrier scheduling according to the embodiment of the present invention. An example of operation of cross-carrier scheduling as illustrated in FIG. 12 is explained with reference to FIG. 13.

In step S11, the base station 10 configures schedulingCellInfo=other (schedulingCellId=n1, cif-InSchedulingCell=n2) in the P(S)Cell that is configured in the terminal 20.

Next, the terminal 20 determines whether SCell(ServCellIndex=n1) is activated by the base station 10. In a case where SCell is activated (YES in S12), step S13 is subsequently performed. In a case where SCell is not activated (NO in S12), step S14 is subsequently performed. The case where SCell is not activated in step S12 may be a case where SCell is deactivated.

In step S13, the terminal 20 assumes that PDSCH or PUSCH of P(S)Cell is cross-carrier scheduled by the DCI of SCell (ServCellIndex=n1) . The CIF included in the DCI may be n2, or may be 0 bit.

In step S14, the terminal 20 reads schedulingCellInfo=other as own, and assumes that PDSCH or PUSCH of P(S)Cell is scheduled by the DCI of P(S)Cell.

The terminal 20 executes communication by using PDSCH or PUSCH of P(S)Cell that has been scheduled.

In this case, Table 2 illustrates an example of change of specifications related to cross-carrier scheduling.

**[Table 2]**

| ***CrossCarrierSchedulingConfig* field descriptions** |
|---|
| ***cif Presence*** |
| The field is used to indicate whether carrier indicator field is present (value *true)* or not (value *false*) in PDCCH DCI formats, see TS 38.213 [13]. If *cif-Presence* is set to *true*, the CIF value indicating a grant or assignment for this cell is 0. |
| ***cif-InSchedulingCell*** |
| The field indicates the CIF value used in the scheduling cell to indicate a grant or assignment applicable for this cell, see TS 38.213 [13]. |
| ***other*** |
| Parameters for cross-carrier scheduling, i.e., a serving cell is scheduled by a PDCCH on another (scheduling) cell. |
| ***own*** |
| Parameters for self-scheduling, i.e., a serving cell is scheduled by its own PDCCH. |
| ***schedulingCellId*** |
| Indicates which cell signals the downlink allocations and uplink grants, if applicable, for the concerned SCell. In case the UE is configured with DC, the scheduling cell is part of the same cell group (i.e. MCG or SCG) as the scheduled cell. |

As shown in Table 2, as an operation indicated by "other", it is only specified that the cell is scheduled by PDCCH of another cell. Specifically, the cell that is configured to "other" is not limited to SCell, and "other" may be set in P(S)Cell.

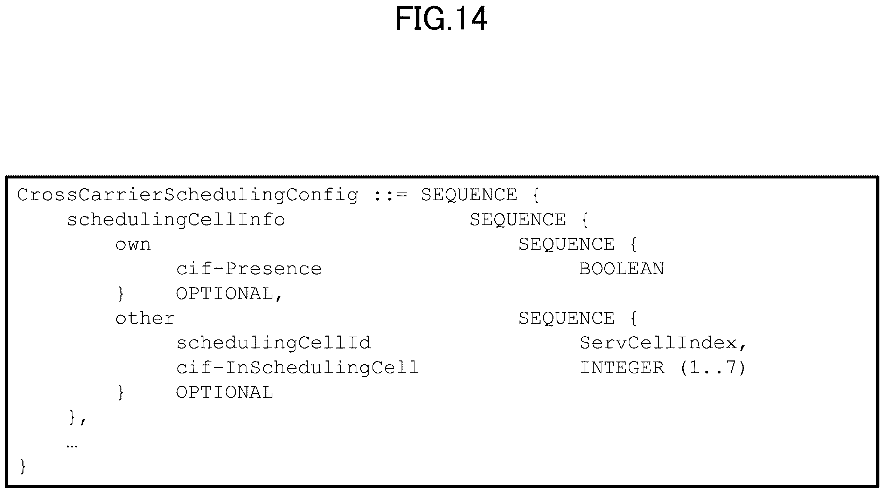

FIG. 14 is a drawing illustrating an example (1) of change of specifications related to cross-carrier scheduling according to the embodiment of the present invention. The terminal 20 may assume that both of "own" and "other" are configured in "schedulingCellInfo". As illustrated in FIG. 14, "own" and "other" are not exclusively selected, and both of "own" and "other" may be configured. Specifically, for P(S)Cell, both of scheduling by the cell itself and scheduling by SCell can be configured.

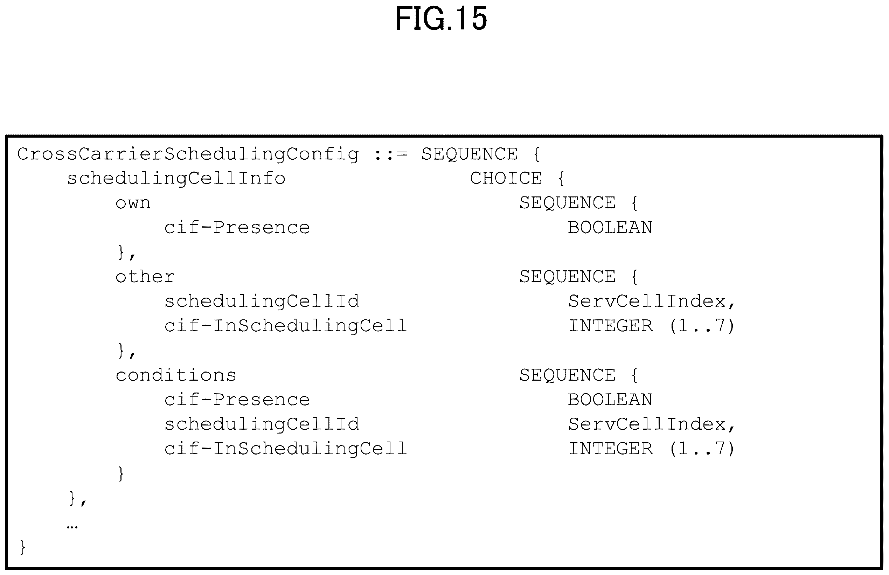

FIG. 15 is a drawing illustrating an example (2) of change of specifications related to cross-carrier scheduling according to the embodiment of the present invention. For the terminal 20, any one of "own", "other", and "conditions" may be configured in "schedulingCellInfo". As illustrated in FIG. 15, information elements included in both of "own" and "other" are configured in "conditions". Specifically, for P(S)Cell, both of scheduling by the cell itself and scheduling by SCell can be configured. The name of "conditions" is an example, and the similar configuration may be executed by an information element of another name.

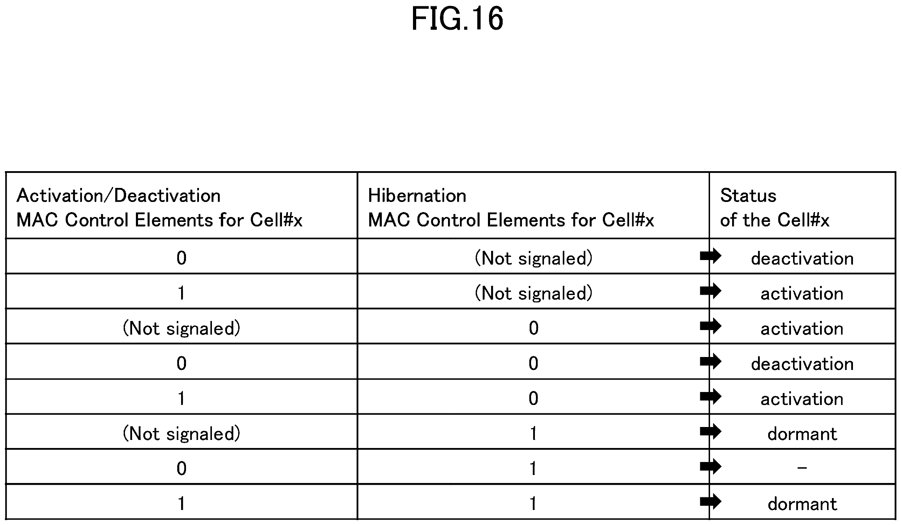

FIG. 16 is a drawing for explaining an example of MAC-CE according to the embodiment of the present invention. During cross-carrier scheduling, the terminal 20 may assume that activation, deactivation, or dormant is signaled by the MAC-CE. As illustrated in FIG. 16, for a Cell#x that is SCell, signaling indicating activation or deactivation and signaling indicating dormant may be executed by the MAC-CE.

For example, in a case where signaling indicating activation or deactivation is not indicated, and signaling indicating dormant is indicated by 1 indicating dormant, the Cell#x may transition to the dormant state. Also, for example, in a case where signaling indicating activation or deactivation is indicated by 1 indicating activation and signaling indicating dormant is indicated by 1 indicating dormant, the terminal 20 may transition to the dormant state. The above-described signaling is not limited to the MAC-CE, and may be executed by L1 indication.

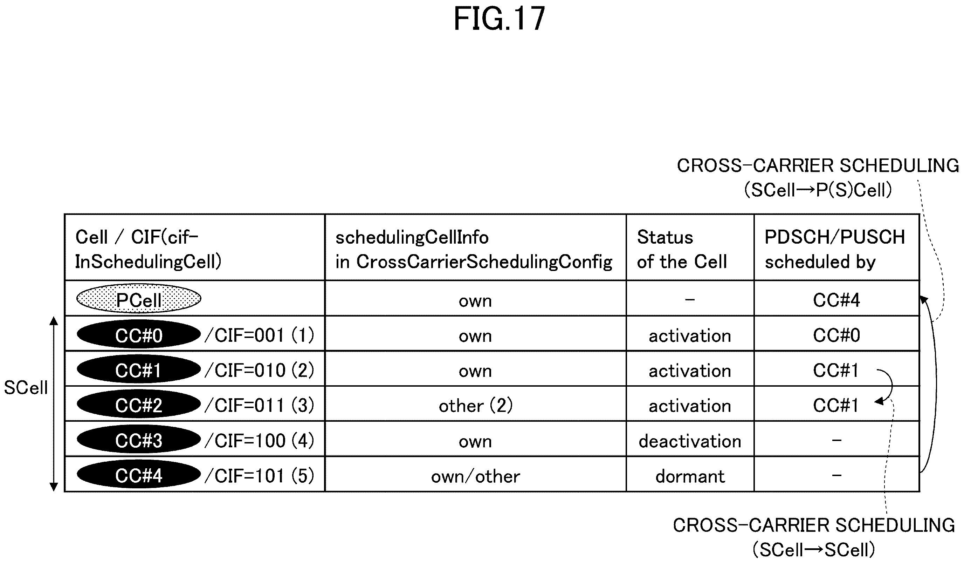

FIG. 17 is a drawing for explaining an example (3) of cross-carrier scheduling according to the embodiment of the present invention. The terminal 20 may determine the SCell for scheduling PDSCH or PUSCH of P(S)Cell on the basis of the state of SCell (status: activation/deactivation/dormant) when cross-carrier scheduling is configured.

In a case where DCI is configured in an SCell of which the state is dormant, e.g., SCell arranged in the CC#4 illustrated in FIG. 17, the terminal 20 may assume that the cell scheduled by the DCI is P(S)Cell. The terminal 20 may assume that the CIF of the DCI is 0 bit, or the terminal 20 may assume the value that is configured by "cif-InschedulingCell" in advance. "schedulingCellInfo" that is configured in P(S)Cell may be "own", and may be read as "other" in response to reception of the DCI.

In a case where the DCI is not configured in an SCell of which the state is dormant, "schedulingCellInfo" that is configured in P(S)Cell may be assumed to be "own". In a case where "schedulingCellInfo" that is configured in P(S)Cell is "other", it may be read as "own".

As explained above, because P(S)Cell is scheduled by using the DCI of SCell of which the state is dormant, P(S)Cell can be scheduled by dynamically selecting any one of a plurality of SCells. For example, for the case where a plurality of SCells are simultaneously in the dormant state, the order of precedence of the plurality of SCells for scheduling P(S)Cell may be configured or specified in advance.

FIG. 17 also illustrates an example where the SCell arranged in the CC#2 is cross-carrier scheduled by the DCI of the SCell arranged in the CC#1. Specifically, in the SCell arranged in the CC#2, "schedulingCellID" may be configured to "2", and "cif-InschedulingCell" may be configured to "3". As described above, the CIF may correspond to the same value as ServCellIndex. However, in an SCell that schedules P(S)Cell, CIF=0 may indicate the cell itself, CIF=previously specified special value may indicate P(S)Cell, and CIF having 0 bit may indicate P(S)Cell.

The SCell that schedules PDSCH or PUSCH of P(S)Cell may be determined on the basis of L1 indication indicating dormancy or non-dormancy when cross-carrier scheduling is configured. For example, in a case where SCell transitions to the dormant state by the L1 indication, the terminal 20 may assume that the cell scheduled by the DCI of the SCell is P(S)Cell. The terminal 20 may assume that the CIF of the DCI is 0 bit, or the terminal 20 may assume the value that is configured by "cif-InschedulingCell" in advance.

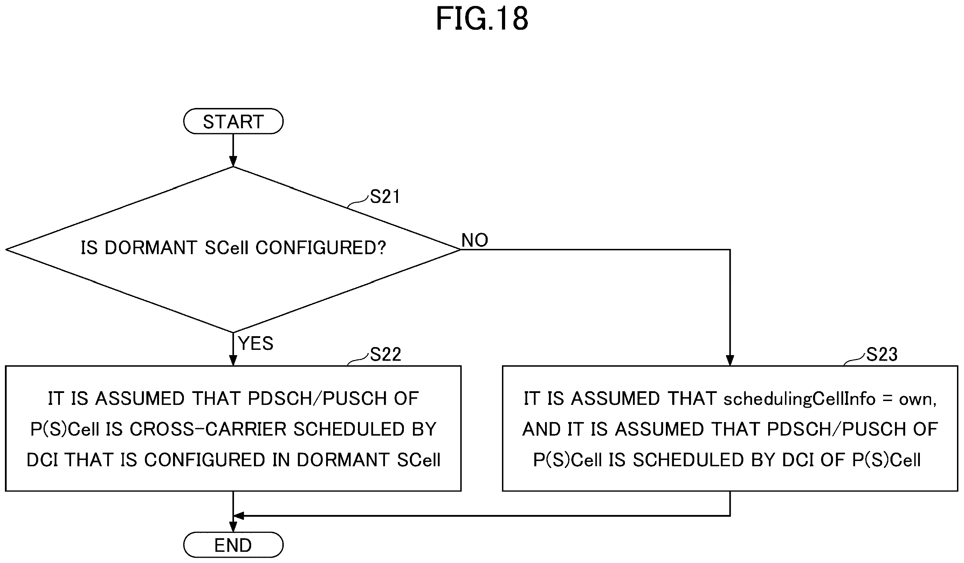

FIG. 18 is a sequence diagram for explaining an example (3) of cross-carrier scheduling according to the embodiment of the present invention. An example of operation of cross-carrier scheduling as illustrated in FIG. 17 is explained with reference to FIG. 18.

In step S21, the terminal 20 determines whether SCell in the dormant state is configured by the base station 10. In a case where SCell in the dormant state is configured (YES in S21), step S22 is subsequently performed, and in a case where SCell in the dormant state is not configured (YES in S22), step S23 is subsequently performed.

In step S22, the terminal 20 assumes that PDSCH or PUSCH of P(S)Cell is cross-carrier scheduled by the DCI that is configured in the SCell in the dormant state.

In step S23, the terminal 20 assumes schedulingCellInfo=own that is configured in P(S)Cell, and assumes that PDSCH or PUSCH of P(S)Cell is scheduled by the DCI of P(S)Cell.

The terminal 20 executes communication by using PDSCH or PUSCH of P(S)Cell that is scheduled.

In a case where cross-carrier scheduling is not configured for the P(S)Cell that is configured in the terminal 20 (for example, schedulingCellInfo=own is configured for P(S)Cell), the terminal 20 may assume that it will not receive PDCCH of SCell when dormant is signaled to the SCell that is configured in the terminal 20.

The embodiment of the present invention can be applied regardless of uplink or downlink and regardless of transmission or reception. In that case, the uplink signal or channel and the downlink signal or channel can be read interchangeably. In addition, uplink feedback information and downlink control signaling can be read interchangeably.

The signaling from the base station 10 to the terminal 20 or the signaling from the terminal 20 to the base station 10 in the above-described embodiment is not limited to an explicit method, and may be implicitly indicated, or uniquely specified by a specification without signaling.

The signaling from the base station 10 to the terminal 20 or the signaling from the terminal 20 to the base station 10 in the above-described embodiment may be signaling in a different layer such as RRC signaling, signaling by MAC-CE, signaling by DCI, or the like, or may be signaling by broadcast information (MIB (Master Information Block), SIB(System Information Block)). For example, RRC signaling and signaling by DCI may be combined, RRC signaling and signaling by MAC-CE may be combined, and RRC signaling, signaling by MAC-CE, and signaling by DCI may be combined.

Although the LTE and the NR are assumed in the above-mentioned embodiment, the above-mentioned embodiment may be applied to a communication system that is newer than NR (for example, referred to as "6G"). For example, the above-mentioned embodiment may be applied to a technique in which NR and 6G coexist.

The embodiments described above can be combined with one another and the features shown in these examples can be combined with one another in various combinations. The embodiments of the present invention are not limited to the particular combination disclosed.

According to above-mentioned embodiment, the base station 10 and the terminal 20 can schedule PDSCH or PUSCH of P(S)Cell by PDCCH of SCell according to the state of SCell.

Specifically, a resource shortage for transmitting and receiving control signals that occur when a plurality of RATs (Radio Access Technologies) coexist in a single carrier in a radio communication system can be alleviated.

### <Apparatus configuration>

Next, an example of functional configuration of the base station 10 and the terminal 20 that execute the processing and operations described so far will be described. The base station 10 and the terminal 20 include a function for implementing the above-described embodiment. However, each of the base station 10 and the terminal 20 may have only some of the functions in the embodiment.

### <Base station 10>

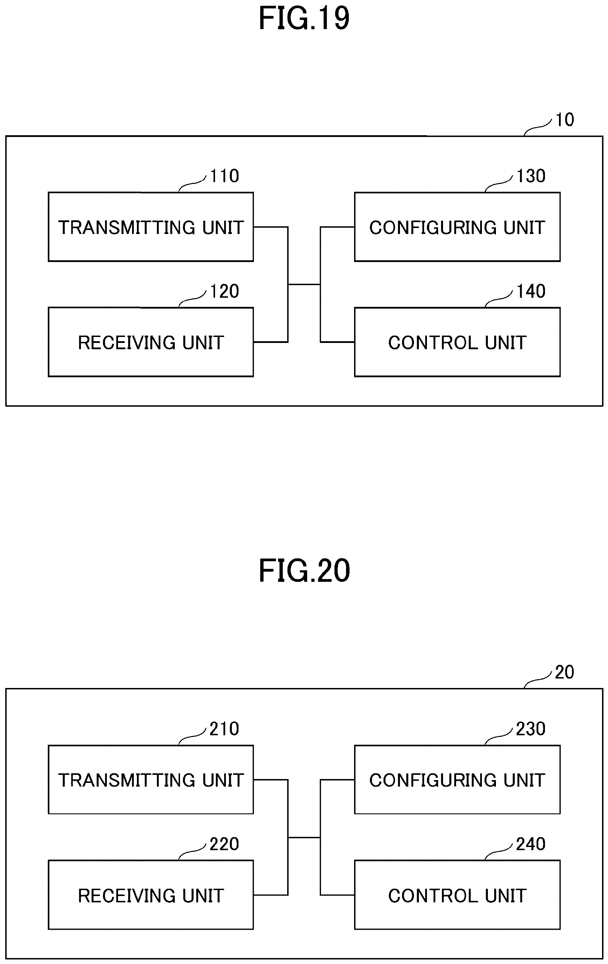

FIG. 19 is a drawing illustrating an example of a functional configuration of the base station 10. As illustrated in FIG. 19, the base station 10 includes a transmitting unit 110, a receiving unit 120, a configuring unit 130, and a control unit 140. The functional configuration illustrated in FIG. 19 is only an example. As long as the operation according to the embodiment of the present invention can be executed, the functions may be divided in any way, and the functional units may be given any names.

The transmitting unit 110 includes a function of generating signals to be transmitted to the terminal 20 and wirelessly transmitting the signals. Also, the transmitting unit 110 transmits an inter-network node message to another network node. The receiving unit 120 includes a function of wirelessly receiving various types of signals transmitted from the terminal 20 and acquiring, for example, information on a higher layer from the received signals. Further, the transmitting unit 110 has a function of transmitting NR-PSS, NR-SSS, NR-PBCH, a DL/UL control signal, a reference signal or the like to the terminal 20. Also, the receiving unit 120 receives an inter-network node message from another network node.

The configuring unit 130 stores configuration information configured in advance and various configuration information to be transmitted to the terminal 20. The contents of the configuration information include, for example, information about configuration of the DSS.

As described in the embodiment, the control unit 140 performs control of cross carrier scheduling. Also, the control unit 140 controls communication by the DSS. In addition, the control unit 140 executes control related to scheduling including cross-carrier scheduling. A functional unit configured to transmit signals in the control unit 140 may be included in the transmitting unit 110, and a functional unit configured to receive signals in the control unit 140 may be included in the receiving unit 120.

### <Terminal 20>

FIG. 20 is a drawing illustrating an example of a functional configuration of the terminal 20 according to the embodiment of the present invention. As illustrated in FIG. 20, the terminal 20 includes a transmitting unit 210, a receiving unit 220, a configuring unit 230, and a control unit 240. The functional configuration illustrated in FIG. 20 is merely an example. As long as the operation according to the embodiment of the present invention can be executed, the functions may be divided in any way, and the function units may be given any names.

The transmitting unit 210 is configured to generate a transmission signal from transmission data and wirelessly transmitting the transmission signal. The receiving unit 220 wirelessly receives various types of signals, and acquires a signal in a higherlayer from the received signal in the physical layer. Also, the receiving unit 220 has a function of receiving NR-PSS, NR-SSS, NR-PBCH, DL/UL/SL control signals, reference signals, and the like that are transmitted from the base station 10. Also, for example, in D2D communication, the transmitting unit 210 transmits, to another terminal 20, a PSCCH (Physical Sidelink Control Channel), a PSSCH (Physical Sidelink Shared Channel), a PSDCH (Physical Sidelink Discovery Channel), a PSBCH (Physical Sidelink Broadcast Channel), and the like. The receiving unit 220 receives the PSCCH, the PSSCH, the PSDCH, the PSBCH, and the like, from another terminal 20.

The configuring unit 230 stores various types of configuration information received from the base station 10 or a terminal 20 by the receiving unit 220. The configuring unit 230 also stores configuration information that is configured in advance. The contents of the configuration information include, for example, information about configuration of the DSS.

As described in the embodiment, the control unit 240 performs control of cross carrier scheduling. Also, the control unit 240 controls communication by the DSS. In addition, the control unit 240 executes control related to scheduling including cross-carrier scheduling. A functional unit configured to transmit signals in the control unit 240 may be included in the transmitting unit 210, and a functional unit configured to receive signals in the control unit 240 may be included in the receiving unit 220.

### <Hardware configuration>

The block diagrams (FIGs. 19 and 20) used for explaining the above embodiments illustrate blocks in units of functions. These functional blocks (constituting units) are implemented by any combinations of at least one of hardware and software. In this regard, a method for implementing the various functional blocks is not particularly limited. That is, each functional block may be implemented by one device united physically and logically. Alternatively, each functional block may be implemented by connecting directly or indirectly (for example, in a wired or wireless manner) two or more devices that are physically or logically separated and connected together and using these multiple devices. The functional block may be implemented by combining software with the single device or multiple devices.

Functions include, but are not limited to, determining, calculating, processing, deriving, investigating, searching, confirming, receiving, transmitting, outputting, accessing, resolving, selecting, establishing, comparing, assuming, expecting, considering, broadcasting, notifying, communicating, forwarding, configuring, reconfiguring, allocating, mapping, assigning, and the like. For example, a functional block (constituting unit) that has a function of transmitting is referred to as a transmitting unit or a transmitter. As described above, a method for implementing these functions is not particularly limited.

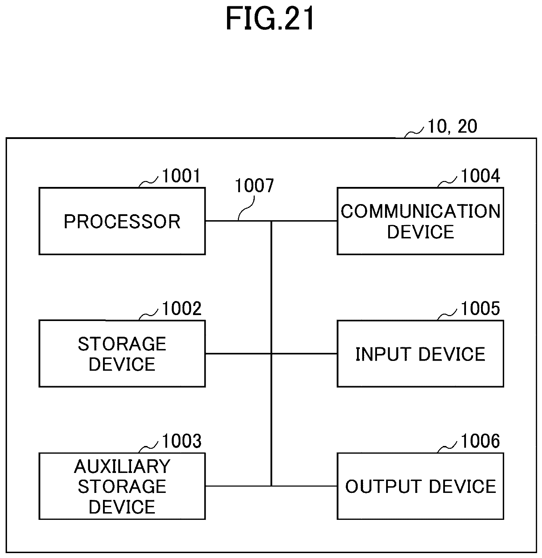

For example, the base station 10, the terminal 20, and the like according to one embodiment of the present disclosure may function as a computer that performs processing of a wireless communication according to the present disclosure. FIG. 21 is a drawing illustrating an example of a hardware configuration of the base station 10 or the terminal 20 according to an embodiment of the present disclosure. Each of the base station 10 and terminal 20 may be physically configured as a computer device including a processor 1001, a storage device 1002, an auxiliary storage device 1003, a communication device 1004, an input device 1005, an output device 1006, a bus 1007, and the like.

It is noted that, in the following description, the term "device" may be read as a circuit, an apparatus, a unit, or the like. The hardware configurations of the base station 10 and the terminal 20 may be configured to include one or more of the devices illustrated in drawings, or may be configured not to include some of the devices.

Each function of the base station 10 and the terminal 20 may be implemented by reading predetermined software (program) to hardware such as the processor 1001, the storage device 1002, or the like, causing the processor 1001 to perform operations, controlling communication by the communication device 1004, and controlling at least one of reading and writing of data in the storage device 1002 and the auxiliary storage device 1003.

The processor 1001 executes, for example, an operating system to control the overall operation of the computer. The processor 1001 may be a central processing unit (CPU) including an interface with peripheral devices, a control device, an arithmetic device, a register, and the like. For example, the control unit 140, the control unit 240, and the like described above may be realized by the processor 1001.

The processor 1001 reads a program (program code), a software module, or data from at least one of the auxiliary storage device 1003 and the communication device 1004 onto the storage device 1002, and performs various processes according to the program, the software module, or the data. As the program, a program that causes a computer to perform at least some of the operations described in the embodiment explained above is used. For example, the control unit 140 of the base station 10, as illustrated in FIG. 19, may be implemented by a control program that is stored in the storage device 1002 and that is executed by the processor 1001. Also, for example, the control unit 240 of the terminal 20, as illustrated in FIG. 20, may be implemented by a control program that is stored in the storage device 1002 and that is executed by the processor 1001. Explanation has been provided above for the case in which the above various processing are performed by the single processor 1001. However, such processing may be simultaneously or sequentially performed by two or more processors 1001. The processor 1001 may be implemented with one or more chips. It is noted that the program may be transmitted from a network through an electronic communication line.

The storage device 1002 is a computer-readable recording medium and may be constituted by at least one of, for example, a ROM (Read Only Memory), an EPROM (Erasable Programmable ROM), an EEPROM (Electrically Erasable Programmable ROM), a RAM (Random Access Memory), and the like. The storage device 1002 may also be referred to as a register, a cache, a main memory (main storage device), or the like. The storage device 1002 can store a program (program code), a software module and the like that can be executed to perform a communication method according to an embodiment of the present disclosure.

The auxiliary storage device 1003 is a computer-readable recording medium and may be configured by at least one of, for example, an optical disk such as a CD-ROM (Compact Disc ROM), a hard disk drive, a flexible disk, a magneto-optical disk (for example, a compact disk, a digital versatile disk, or a Bluray (registered trademark) disk), a smart card, a flash memory (for example, a card, a stick, or a key drive), a floppy (registered trademark) disk, a magnetic strip, and the like. The above storage medium may be, for example, a database, a server, or other appropriate media including at least one of the storage device 1002 and the auxiliary storage device 1003.

The communication device 1004 is hardware (a transmission and reception device) for performing communication between computers through at least one of a wired and wireless network and may also be referred to as, for example, a network device, a network controller, a network card, a communication module, or the like. The communication device 1004 may include, for example, a radio frequency switch, a duplexer, a filter, a frequency synthesizer, or the like to implement at least one of a frequency division duplex (FDD) and a time division duplex (TDD). For example, a transmission and reception antenna, an amplifier, a transmitting and receiving unit, a transmission line interface, and the like may be implemented by the communication device 1004. The transmitting and receiving unit may be implemented in such a manner that a transmitting unit and a receiving unit are physically or logically separated.

The input device 1005 is an input device (for example, a keyboard, a mouse, a microphone, a switch, a button, a sensor, or the like) that receives an input from the outside. The output device 1006 is an output device (for example, a display, a speaker, an LED lamp, or the like) that performs an output to the outside. It is noted that the input device 1005 and the output device 1006 may be integrated with each other (for example, a touch panel).

The devices, such as the processor 1001 and the storage device 1002, are connected to each other via a bus 1007 for communicating information. The bus 1007 may be constituted by using a single bus, or may be constituted by using different buses depending on devices.

The base station 10 and the terminal 20 may include hardware, such as a microprocessor, a digital signal processor (DSP), an ASIC (Application Specific Integrated Circuit), a PLD (Programmable Logic Device), or an FPGA (Field Programmable Gate Array), or alternatively, some or all of the functional blocks may be implemented by the hardware. For example, the processor 1001 may be implemented with at least one of these hardware components.

### <Summary of Embodiment>

As described above, according to the embodiment of the present invention, provided is a terminal that includes a receiving unit configured to receive signaling that causes a secondary cell to be dormant and control information via the secondary cell, a control unit configured to, in a case where the receiving unit receives the signaling that activates the secondary cell, assume that a channel of a primary cell is scheduled by the control information, and a communication unit configured to execute transmission or reception by using the channel of the primary cell.

According to the above-described configuration, the base station 10 and the terminal 20 can schedule PDSCH or PUSCH of P(S)Cell by PDCCH of SCell according to the state of SCell. Therefore, a resource shortage for transmitting and receiving control signals can be alleviated when a plurality of RATs (Radio Access Technologies) coexist in a single carrier in a radio communication system.

The primary cell and the secondary cell may be operated by different RATs, Radio Access Technologies, in a same carrier. According to this configuration, in a case where multiple RATs coexist in a single carrier, the base station 10 and the terminal 20 can schedule PDSCH or PUSCH of P(S)Cell by PDCCH of SCell according to the state of SCell.

The control unit may be configured to, in a case where the receiving unit does not receive the signaling that causes the secondary cell to be dormant, assume that the channel of the primary cell is scheduled by the primary cell itself. According to this configuration, the base station 10 and the terminal 20 can schedule PDSCH or PUSCH of P(S)Cell by PDCCH of P(S)Cell according to the state of SCell.

The signaling that causes the secondary cell to be dormant may be a layer-1 indication. According to this configuration, the base station 10 and the terminal 20 can switch between: scheduling PDSCH or PUSCH of P(S)Cell by PDCCH of P(S)Cell by PDCCH of P(S)Cell; or scheduling PDSCH or PUSCH of P(S)Cell by PDCCH of P(S)Cell, depending on the state transition of SCell by the L1 indication.

Also, according to the embodiment of the present invention, provided is a base station that includes a transmitting unit configured to transmit signaling that causes a secondary cell to be dormant and control information via the secondary cell, a control unit configured to, in a case where the transmitting unit transmits the signaling that activates the secondary cell, schedule a channel of a primary cell by the control information, and a communication unit configured to execute transmission or reception by using the channel of the primary cell.

According to the above-described configuration, the base station 10 and the terminal 20 can schedule PDSCH or PUSCH of P(S)Cell by PDCCH of SCell according to the state of SCell. Specifically, a resource shortage for transmitting and receiving control signals can be alleviated when a plurality of RATs (Radio Access Technologies) coexist in a single carrier in a radio communication system.

Also, according to the embodiment of the present invention, provided is a communication method that causes a terminal to execute receiving signaling that causes a secondary cell to be dormant and control information via the secondary cell, in a case where the signaling that causes the secondary cell to be dormant is received in the receiving, assuming that a channel of a primary cell is scheduled by the control information, and executing transmission or reception by using the channel of the primary cell.

According to the above-described configuration, the base station 10 and the terminal 20 can schedule PDSCH or PUSCH of P(S)Cell by PDCCH of SCell according to the state of SCell. Specifically, a resource shortage for transmitting and receiving control signals can be alleviated when a plurality of RATs (Radio Access Technologies) coexist in a single carrier in a radio communication system.

### <Supplements to Embodiment>

The embodiment of the present invention has been described above, but the disclosed invention is not limited to the above embodiment, and those skilled in the art would understand that various modified examples, revised examples, alternative examples, substitution examples, and the like can be made. In order to facilitate understanding of the present invention, specific numerical value examples are used for explanation, but the numerical values are merely examples, and any suitable values may be used unless otherwise stated. Classifications of items in the above description are not essential to the present invention, contents described in two or more items may be used in combination if necessary, and contents described in an item may be applied to contents described in another item (unless a contradiction arises). The boundaries between the functional units or the processing units in the functional block diagrams do not necessarily correspond to the boundaries of physical components. Operations of a plurality of functional units may be physically implemented by a single component and an operation of a single functional unit may be physically implemented by a plurality of components. Concerning the processing procedures described above in the embodiments, the orders of steps may be changed unless a contradiction arises. For the sake of convenience for describing the processing, the base station 10 and the terminal 20 have been described with the use of the functional block diagrams, but these apparatuses may be implemented by hardware, software, or a combination thereof. Each of software functioning with a processor of the base station 10 according to the embodiment of the present invention and software functioning with a processor of the terminal 20 according to the embodiment of the present invention may be stored in a random access memory (RAM), a flash memory, a read-only memory (ROM), an EPROM, an EEPROM, a register, a hard disk (HDD), a removable disk, a CD-ROM, a database, a server, or any suitable recording media.

Also, the notification of information is not limited to the aspect or embodiment described in the present disclosure, but may be performed by other methods. For example, the notification of information may be performed by physical layer signaling (for example, DCI (Downlink Control Information), UCI (Uplink Control Information)), higher layer signaling (for example, RRC (Radio Resource Control) signaling, MAC (Medium Access Control) signaling, broadcast information (an MIB (Master Information Block) and an SIB (System Information Block)), other signals, or combinations thereof. The RRC signaling may be also be referred to as an RRC message and may be, for example, an RRC connection setup message, an RRC connection reconfiguration message, or the like.

Each aspect and embodiment described in the present disclosure may be applied to at least one of a system that uses a suitable system such as LTE (Long Term Evolution), LTE-A (LTE-Advanced), SUPER 3G, IMT-Advanced, 4G (4th generation mobile communication system), 5G (5th generation mobile communication system), FRA (Future Radio Access), NR (New Radio), W-CDMA (registered trademark), GSM (registered trademark), CDMA2000, UMB (Ultra Mobile Broadband), IEEE 802.11 (Wi-Fi (registered trademark)), IEEE 802.16 (WiMAX (registered trademark)), IEEE 802.20, UWB (Ultra-WideBand), or Bluetooth (registered trademark), and a next-generation system expanded on the basis thereof. Also, a plurality of systems may be combined and applied (for example, a combination of at least one of LTE and LTE-A with 5G, and the like).

In the operation procedures, sequences, flowcharts, and the like according to each aspect and embodiment described in the present disclosure, the orders of steps may be changed unless a contradiction arises. For example, in the methods described in the present disclosure, elements of various steps are illustrated by using an exemplary order and the methods are not limited to the specific orders presented.

The specific operations performed by the base station 10 described in the present disclosure may in some cases be performed by an upper node. It is clear that, in a network that includes one or more network nodes including the base station 10, various operations performed for communication with the terminal 20 can be performed by at least one of the base station 10 and another network node other than the base station 10 (for example, a MME, a S-GW, or the like may be mentioned, but not limited thereto). In the above, the description has been made for the case where another network node other than the base station 10 is a single node as an example. But the another network node may be a combination of a plurality of other network nodes (for example, a MME and a S-GW).

Information, signals, or the like described in the present disclosure may be output from a higher layer (or a lower layer) to a lower layer (or a higher layer). Information, signals, or the like described in the present disclosure may be input and output via a plurality of network nodes.

Information or the like that has been input or output may be stored at a predetermined place (for example, a memory) and may be managed with the use of a management table. Information or the like that is input or output can be overwritten, updated, or appended. Information or the like that has been output may be deleted. Information or the like that has been input may be transmitted to another apparatus.

In the present disclosure, determination may be made with the use of a value expressed by one bit (0 or 1), may be made with the use of a Boolean value (true or false), and may be made through a comparison of numerical values (for example, a comparison with a predetermined value).

Regardless of whether software is referred to as software, firmware, middleware, microcode, a hardware description language, or another name, software should be interpreted broadly to mean instructions, instruction sets, codes, code segments, program codes, a program, a sub-program, a software module, an application, a software application, a software package, a routine, a subroutine, an object, an executable file, an execution thread, a procedure, a function, and the like.

Software, instructions, information, or the like may be transmitted and received through transmission media. For example, in a case where software is transmitted from a website, a server or another remote source through at least one of wired technology (such as a coaxial cable, an optical-fiber cable, a twisted pair, or a digital subscriber line (DSL)) and radio technology (such as infrared or microwaves), at least one of the wired technology and the radio technology is included in the definition of a transmission medium.

Information, signals, and the like described in the present disclosure may be expressed with the use of any one of various different technologies. For example, data, instructions, commands, information, signals, bits, symbols, chips, and the like mentioned herein throughout the above explanation may be expressed by voltages, currents, electromagnetic waves, magnetic fields or magnetic particles, optical fields or photons, or any combinations thereof.

The terms described in the present disclosure and the terms necessary for understanding the present disclosure may be replaced with terms having the same or similar meanings. For example, at least one of a channel and a symbol may be a signal (signaling). A signal may be a message. A component carrier (CC) may be referred to as a carrier frequency, a cell, a frequency carrier, or the like.

The terms "system" and "network" used in the present disclosure are used interchangeably.

Information, parameters, and the like described in the present disclosure may be expressed by absolute values, may be expressed by relative values with respect to predetermined values, and may be expressed by corresponding different information. For example, radio resources may be indicated by indexes.

The above-described names used for the parameters are not restrictive in any respect. In addition, formulas or the like using these parameters may be different from those explicitly disclosed in the present disclosure. Various channels (for example, a PUCCH, a PDCCH, and the like) and information elements can be identified by any suitable names, and therefore, various names given to these various channels and information elements are not restrictive in any respect.

In the present disclosure, terms such as "base station (BS)", "radio base station", "base station apparatus", "fixed station", "NodeB", "eNodeB (eNB)", "gNodeB (gNB)", "access point", "transmission point", "reception point", "transmission/reception point", "cell", "sector", "cell group", "carrier", "component carrier", and the like may be used interchangeably. A base station may be referred to as a macro-cell, a small cell, a femtocell, a pico-cell, or the like.

A base station can accommodate one or a plurality of (for example, three) cells (that may be called sectors). In a case where a base station accommodates a plurality of cells, the whole coverage area of the base station can be divided into a plurality of smaller areas. For each smaller area, a base station subsystem (for example, an indoor miniature base station RRH (Remote Radio Head)) can provide a communication service. The term "cell" or "sector" denotes all or a part of the coverage area of at least one of a base station and a base station subsystem that provides communication services in the coverage.

In the present disclosure, terms such as "mobile station (MS)", "user terminal", "user equipment (UE)", and "terminal" may be used interchangeably.

By the person skilled in the art, a mobile station may be referred to as any one of a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, and other suitable terms.

At least one of a base station and a mobile station may be referred to as a transmitting apparatus, a receiving apparatus, a communication apparatus, or the like. At least one of a base station and a mobile station may be an apparatus mounted on a mobile body, or may be a mobile body itself, or the like. A mobile body may be a transporting device (e.g., a vehicle, an airplane, and the like), an unmanned mobile (e.g., a drone, an automated vehicle, and the like), or a robot (of a manned or unmanned type). It is noted that at least one of a base station and a mobile station includes an apparatus that does not necessarily move during a communication operation. For example, at least one of a base station and a mobile station may be an IoT (Internet of Things) device such as a sensor.

In addition, a base station according to the present disclosure may be read as a user terminal. For example, each aspect or embodiment of the present disclosure may be applied to a configuration in which communication between a base station and a user terminal is replaced by communication between a plurality of terminals 20 (that may be called D2D (Device-to-Device), V2X (Vehicle-to-Everything), or the like). In this case, a terminal 20 may have above-described functions of the base station 10. In this regard, a word such as "up" or "down" may be read as a word corresponding to communication between terminals (for example, "side"). For example, an uplink channel, a downlink channel, or the like may be read as a side channel.

Similarly, a user terminal according to the present disclosure may be replaced with a base station. In this case, a base station may have above-described functions of the user terminal.

The term "determining" used herein may mean various operations. For example, judging, calculating, computing, processing, deriving, investigating, looking up, searching, inquiring (for example, looking up a table, a database, or another data structure), ascertaining, or the like may be deemed as making determination. Also, receiving (for example, receiving information), transmitting (for example, transmitting information), inputting, outputting, or accessing (for example, accessing data in a memory), or the like may be deemed as making determination. Also, resolving, selecting, choosing, establishing, comparing, or the like may be deemed as making determination. That is, doing a certain operation may be deemed as making determination. "Determining" may be read as "assuming", "expecting", "considering", or the like.

Each of the terms "connected" and "coupled" and any variations thereof mean any connection or coupling among two or more elements directly or indirectly and can mean that one or a plurality of intermediate elements are inserted among two or more elements that are "connected" or "coupled" together. Coupling or connecting among elements may be a physical one, may be a logical one, and may be a combination thereof. For example, "connecting" may be read as "accessing". In a case where the terms "connected" and "coupled" and any variations thereof are used in the present disclosure, it may be considered that two elements are "connected" or "coupled" together with the use of at least one type of a medium from among one or a plurality of wires, cables, and printed conductive traces, and in addition, as some non-limiting and non-inclusive examples, it may be considered that two elements are "connected" or "coupled" together with the use of electromagnetic energy such as electromagnetic energy having a wavelength of the radio frequency range, the microwave range, or the light range (including both of the visible light range and the invisible light range).

A reference signal can be abbreviated as an RS (Reference Signal). A reference signal may be referred to as a pilot depending on an applied standard.

A term "based on" used in the present disclosure does not mean "based on only" unless otherwise specifically noted. In other words, a term "based on" means both "based on only" and "based on at least".

Any references to elements denoted by a name including terms such as "first" or "second" used in the present disclosure do not generally limit the amount or the order of these elements. These terms can be used in the present disclosure as a convenient method for distinguishing one or a plurality of elements. Therefore, references to first and second elements do not mean that only the two elements can be employed or that the first element should be, in some way, prior to the second element.

"Means" in each of the above apparatuses may be replaced with "unit", "circuit", "device", or the like.

In a case where any one of "include", "including", and variations thereof is used in the present disclosure, each of these terms is intended to be inclusive in the same way as the term "comprising". Further, the term "or" used in the present disclosure is intended to be not exclusive-or.

A radio frame may include, in terms of time domain, one or a plurality of frames. Each of one or a plurality of frames may be referred to as a subframe in terms of time domain. A subframe may include, in terms of time domain, one or a plurality of slots. A subframe may have a fixed time length (e.g., 1 ms) independent of numerology.

The numerology may be a communication parameter that is applied to at least one of transmission and reception of a signal or a channel. The numerology may mean, for example, at least one of a subcarrier spacing (SCS), a bandwidth, a symbol length, a cyclic prefix length, a transmission time interval (TTI), the number of symbols per TTI, a radio frame configuration, a specific filtering processing performed by a transceiver in the frequency domain, a specific windowing processing performed by a transceiver in the time domain, and the like.

A slot may include, in terms of time domain, one or a plurality of symbols (OFDM (Orthogonal Frequency Division Multiplexing) symbols, SC-FDMA (Single Carrier Frequency Division Multiple Access) symbols) symbols, or the like). A slot may be a time unit based on the numerology.

A slot may include a plurality of minislots. Each minislot may include one or a plurality of symbols in terms of the time domain. A minislot may also be referred to as a subslot. A minislot may include fewer symbols than a slot. A PDSCH (or PUSCH) transmitted at a time unit greater than a minislot may be referred to as a PDSCH (or PUSCH) mapping type A. A PDSCH (or PUSCH) transmitted using minislots may be referred to as a PDSCH (or PUSCH) mapping type B.

Each of a radio frame, a subframe, a slot, a minislot, and a symbol means a time unit configured to transmit a signal. Each of a radio frame, a subframe, a slot, a minislot, and a symbol may be referred to as other names respectively corresponding thereto.

For example, one subframe may be referred to as a transmission time interval (TTI), a plurality of consecutive subframes may be referred to as a TTI, and one slot or one minislot may be referred to as a TTI. That is, at least one of a subframe and a TTI may be a subframe (1 ms) according to the existing LTE, may have a period shorter than 1 ms (e.g., 1 to 13 symbols), and may have a period longer than 1 ms. Instead of subframes, units expressing a TTI may be referred to as slots, minislots, or the like.

A TTI means, for example, a minimum time unit of scheduling in radio communication. For example, in an LTE system, a base station performs scheduling for each terminal 20 to assign, in TTI units, radio resources (such as frequency bandwidths, transmission power, and the like that can be used by each terminal 20). However, the definition of a TTI is not limited thereto.

A TTI may be a transmission time unit for channel-coded data packets (transport blocks), code blocks, code words, or the like, and may be a unit of processing such as scheduling, link adaptation, or the like. When a TTI is given, an actual time interval (e.g., the number of symbols) to which transport blocks, code blocks, code words, or the like are mapped may be shorter than the given TTI.

In a case where one slot or one minislot is referred to as a TTI, one or a plurality of TTIs (i.e., one or a plurality of slots or one or a plurality of minislots) may be a minimum time unit of scheduling. The number of slots (the number of minislots) included in the minimum time unit of scheduling may be controlled.

A TTI having a time length of 1 ms may referred to as an ordinary TTI (a TTI according to LTE Rel.8-12), a normal TTI, a long TTI, an ordinary subframe, a normal subframe, a long subframe, a slot, or the like. A TTI shorter than an ordinary TTI may be referred to as a shortened TTI, a short TTI, a partial or fractional TTI, a shortened subframe, a short subframe, a minislot, a subslot, a slot, or the like.

Note that a long TTI (for example, normal TTI, subframe, and the like) may be read as TTI having a time length exceeding 1 ms, and a short TTI (for example, shortened TTI) may be read as a TTI having a TTI length less than the TTI length of the long TTI and equal to or more than 1 ms.

A resource block (RB) is a resource assignment unit in terms of time domain and frequency domain and may include one or a plurality of consecutive subcarriers in terms of frequency domain. The number of subcarriers included in an RB may be the same regardless of the numerology, and, for example, may be 12. The number of subcarriers included in a RB may be determined based on the numerology.

In terms of time domain, an RB may include one or a plurality of symbols, and may have a length of 1 minislot, 1 subframe, or 1 TTI. Each of 1 TTI, 1 subframe, and the like may include one or a plurality of resource blocks.

One or a plurality of RBs may be referred to as physical resource blocks (PRBs: Physical RBs), a subcarrier group (SCG: Sub-Carrier Group), a resource element group (REG: Resource Element Group), a PRB pair, an RB pair, or the like.

A resource block may include one or a plurality of resource elements (RE: Resource Elements). For example, 1 RE may be a radio resource area of 1 subcarrier and 1 symbol.

A bandwidth part (BWP) (which may be called a partial bandwidth or the like) may mean a subset of consecutive common RBs (common resource blocks) for the numerology, in any given carrier. A common RB may be identified by a RB index with respect to a common reference point in the carrier. PRBs may be defined by a BWP and may be numbered in the BWP.

A BWP may include a BWP (UL BWP) for UL and a BWP (DL BWP) for DL. For a UE, one or a plurality of BWPs may be configured in 1 carrier.

At least one of BWPs that have been configured may be active, and a UE need not assume sending or receiving a predetermined signal or channel outside the active BWP. A "cell", a "carrier" or the like in the present disclosure may be read as a "BWP".

The above-described structures of radio frames, subframes, slots, minislots, symbols, and the like are merely examples. For example, the number of subframes included in a radio frame, the number of slots included in a subframe or a radio frame, the number of minislots included in a slot, the number of symbols and the number of RBs included in a slot or a minislot, the number of subcarriers included in an RB, the number of symbols included in a TTI, a symbol length, a cyclic prefix (CP) length, and the like can be variously changed.

Throughout the present disclosure, in a case where an article such as "a", "an", or "the" in English is added through a translation, the present disclosure may include a case where a noun following such article is of a plural form.

Throughout the present disclosure, an expression that "A and B are different" may mean that "A and B are different from each other". Also, this term may mean that "each of A and B is different from C". Terms such as "separate" and "coupled" may also be interpreted in a manner similar to "different".

Each aspect or embodiment described in the present disclosure may be solely used, may be used in combination with another embodiment, and may be used in a manner of being switched with another embodiment upon implementation. Notification of predetermined information (for example, notification of "being x") may be implemented not only explicitly but also implicitly (for example, by not notifying predetermined information).

In the present disclosure, the DCI is an example of control information. The transmitting unit 210 and the receiving unit 220 are examples of a communication unit.

Although the present disclosure has been described above, it will be understood by those skilled in the art that the present disclosure is not limited to the embodiment described in the present disclosure. Modifications and changes of the present disclosure may be possible without departing from the subject matter and the scope of the present disclosure defined by claims. Therefore, the descriptions of the present disclosure are for illustrative purposes only, and are not intended to be limiting the present disclosure in any way.

### Reference Signs List

- 10: base station
- 110: transmitting unit
- 120: receiving unit
- 130: configuring unit
- 140: control unit
- 20: terminal
- 210: transmitting unit
- 220: receiving unit
- 230: configuring unit
- 240: control unit
- 1001: processor
- 1002: storage device
- 1003: auxiliary storage device
- 1004: communication device
- 1005: input device
- 1006: output device

## Claims

1. A terminal comprising:
a receiving unit configured to receive signaling that causes a secondary cell to be dormant and control information via the secondary cell;
a control unit configured to, in a case where the receiving unit receives the signaling that causes the secondary cell to be dormant, assume that a channel of a primary cell is scheduled by the control information; and
a communication unit configured to execute transmission or reception by using the channel of the primary cell.

2. The terminal according to claim 1, wherein the primary cell and the secondary cell are operated by different RATs, Radio Access Technologies, in a same carrier.

3. The terminal according to claim 1, wherein the control unit is configured to, in a case where the receiving unit does not receive the signaling that causes the secondary cell to be dormant, assume that the channel of the primary cell is scheduled by the primary cell itself.

4. The terminal according to claim 1, wherein the signaling that causes the secondary cell to be dormant is a layer-1 indication.

5. A base station comprising:
a transmitting unit configured to transmit signaling that causes a secondary cell to be dormant and control information via the secondary cell;
a control unit configured to, in a case where the transmitting unit transmits the signaling that causes the secondary cell to be dormant, schedule a channel of a primary cell by the control information; and
a communication unit configured to execute transmission or reception by using the channel of the primary cell.

6. A communication method that causes a terminal to execute:
receiving signaling that causes a secondary cell to be dormant and control information via the secondary cell;
in a case where the signaling that causes the secondary cell to be dormant is received in the receiving, assuming that a channel of a primary cell is scheduled by the control information; and
executing transmission or reception by using the channel of the primary cell.
